# EUROPÄISCHE PATENTSCHRIFT

(11) **EP 0 374 621 B1**
(45) Veröffentlichungstag und Bekanntmachung des Hinweises auf die Patenterteilung: **08.09.1993**
(21) Anmeldenummer: 89122653.2
(22) Anmeldetag: 08.12.1989
(51) Int. Cl.: C08K 5/13, C08L 71/02, C08G 18/28

(54) **Verwendung von 3,5-Di-tert, butyl-4-hydroxyphenylpropionsäure zur Stabilisierung von Polyetherpolyolen**
Use of 3,5-di-t.-butyl-4-hydroxyphenyl propionic acid in the stabilisation of polyether polyols
Utilisation de l'acide 3,5-di-t-butyl-4-hydroxyphénylpropionique pour la stabilisation de polyétherpolyols

(30) Priorität: 21.12.1988 DE 3842945
(43) Veröffentlichungstag der Anmeldung: 27.06.1990
(73) Patentinhaber: BAYER AG, 51368 Leverkusen (DE)
(72) Erfinder: Gupta, Pramod, Dr., D-5012 Bedburg (DE); Engels, Hans-Wilhelm, Dr., D-5014 Kerpen-Sindorf (DE); Rabe, Hansjürgen, Dr., D-5090 Leverkusen 3 (DE)

(56) Entgegenhaltungen:
- DE-A- 2 209 102
- US-A- 3 729 441

## Beschreibung

Die vorliegende Erfindung betrifft die Verwendung von 3,5-Di-tert.butyl-4-hydroxyphenylpropionsäure (BHP) als Stabilisator für Polyetherpolyole und für daraus hergestellte Polyurethane.

Stabilisatoren bzw. Antioxidantien für Polyether und Polyurethane sind wohlbekannt und umfassen sterisch gehinderte Phenole, Bisphenole, Dialkyldiphenylamine, Phenothiazine, Phosphite bzw. Gemische von Vertretern aus diesen Substanzklassen (vgl. z.B. US-PS 4 070 304, US-PS 4 444 676-A, DE-OS 2 557 619, EP-A-38876).

Die Wirksamkeit der Antioxidantien ist einerseits durch die Substanzklasse (Diphenylamine, Phenothiazine, sterisch gehinderte Phenole), andererseits durch die Substratverträglichkeit bestimmt.

Am häufigsten findet 2,6-Di-tert.butyl-4-methylphenol (BHT) allein oder in Kombination mit weiteren Verbindungen der angeführten Stabilisatorklassen Verwendung zur Stabilsierung von Polyetherpolyolen.

Nachteil von BHT ist die relativ hohe Flüchtigkeit und Migrationstendenz in Polyurethane umhüllende Substrate sowie die daraus resultierende starke Gelbfärbung der Substrate in NOₓ-belasteter Atmosphäre. Stabilisatoren ohne diese Nachteile sind daher von Interesse, und es war Aufgabe der vorliegenden Erfindung, solche Materialien bereitzustellen.

Metallsalze von 3,5-Di-tert.butyl-4-hydroxyphenylproprionsäure werden in DE-OS 2 209 102 zur Stabilisierung von organischem Material beschrieben, wobei die substratabhängige Wirksamkeit entscheidend vom verwendeten Metallatom abhängt.

Gegenstand der vorliegenden Erfindung ist die Verwendung van 3,5-Di-tert.butyl-4-hydroxyphenylpropionsäure (BHP) als Stabilisator für Polyetherpolyole vom Molgewicht 300 bis 10000.

Obwohl freie Carboxylgruppen als Substituenten normalerweise nicht zu Stabilisatoren besonderer Wirksamkeit führen und deshalb in aller Regel Derivate von Carbonsäuren, wie Ester, Amide, Hydrazide etc. verwendet werden, wurde jetzt überraschenderweise gefunden, daß 3,5-Di-tert.butyl-4-hydroxyphenylpropionsäure ausgezeichnet als stabilisierendes Antioxidans bei der Herstellung von Polyetherpolyolen des Molgewichtsbereichs 300-10000 geeignet ist. Je nach Grundaufbau des Polyetherpolyols sind auch Kombinationen mit herkömmlichen Antioxydantien wirksam, wobei im allgemeinen von 3,5-Di-tert.butyl-4-hydroxyphenylpropionsäure Mengen von 0,01 - 4,0 Gew.-%, vorzugsweise 0,01 - 1 Gew.-%, und bei Kombinationsstabilisatoren von 0,01-0,5 Gew.-% bezogen auf das Polyetherpolyol zum Einsatz gelangen können.

BHP, das z.B. durch basisch katalysierte Addition von Acrylsäuremethylester an 2,6-Di-tert.-butylphenol und anschließende Verseifung (siehe DE 2 120 285) hergestellt und im Handel erhältlich ist, eignet sich bei allen gebräuchlichen Polyetherpolyolen wie z.B. mono-, di-, tri-, tetra- und hexafunktionellen Polyethern sowie Polyethern gebrochener Funktionalität, die durch Umsetzung von Epoxiden mit Kombinationen von Starteralkoholen hergestellt werden. Diese Polyether können aus herkömmlichen Epoxiden in reiner Form oder in beliebigen Kombinationen hergestellt sein.

Aus den so hergestellten bzw. stabilisierten Polyetherpolyolen und nach üblichen Rezepturen gefertigte Polyurethane bzw. Polyurethanschaumstoffe zeigen ein verbessertes Verhalten gegen Kernverfärbung und bleiben indifferent hinsichtlich Gelbfärbung von Umhüllungen (Textil, Leder) unter Einwirkung von NOₓ-Gasen (Industrie-, bzw. verkehrsreiche Gegenden). Derartige Verfärbungen treten bei üblicherweise mit BHT stabilisierten Polyethern und daraus hergestellten Schaumstoffen häufig auf. Sie werden hervorgerufen durch die Migrationstendenz des BHT, das in den Umhüllungen (Textil, Leder) bei Feuchteeinwirkung mit NOₓ zu stark gelben Farbstoffen reagiert.

Der Gegenstand der vorliegenden Erfindung soll anhand der folgenden Beispiele noch näher erläutert werden (%-Angaben bedeuten jeweils Gew.-%-Angaben).

### Beispiel 1

Ein langkettiger EO (Ethylenoxid) und PO (Propylenoxid) enthaltender Polyether der OH-Zahl 46, Molgewicht ca. 4.000 mit sekundären Hydroxylgruppen wurde hergestellt mit:
a) 0,15 % 3,5-Di-tert.-butyl-4-hydroxyphenylpropionsäure (BHP)
b) 0,1 % 3,5-Di-tert.butyl-4-hydroxyphenylpropionsäure und 0,1 % octyliertes Diphenylamin (Vulkanox OCD®)
c) 0,1 % BHT
   0,1 % octyliertes Diphenylamin (Vulkanox OCD®)

Alle Polyether wurden mit einer für Weichschaum nach dem Stand der Technik üblichen Rezeptur (z.B. US-PS 4 070 304) verschäumt und zeigten in einem speziellen Heißlufttest um die Einblasstelle eine Verfärbung von:
a) 15 cm² gelb
b) 25 cm² gelb, 7 cm² braun
c) 80 cm² gelb, 22 cm² braun.

Die Vorgabetemperatur der Heißluft betrug 207° C, die Temperatur im Schaum bei a) 203°C, b) 206°C, c) 209°C.

Ein "Gelbtest" mit Frottierstoff umhüllten Schaummuster ergab bei a) und b) keine Gelbfärbung des Stoffes, bei c) charakteristische Gelbfärbung im Bereich der Umluftströmung.

### Beispiel 2

Ein langkettiger EO und PO enthaltender Polyether der OH-Zahl 35, Molgewicht ca. 5.000, mit primären Hydroxylgruppen wurde hergestellt mit:
a) 0,1 % BHT
b) 0,1 % 3,5-Di-tert.butyl-4-hydroxyphenylpropionsäure (BHP)
c) 0,1 % 3,5-Di-tert.butyl-4-hydroxybenzoesäure

Die Polyether wurden mit einer für Weichschaum nach dem Stand der Technik entsprechenden Rezeptur verschäumt und zeigten in einem speziellen Heißlufttest um die Einblasstelle folgende Verfärbungen:
a) 80 cm² gelb, 35 cm² braun
b) keine
c) 50 cm² gelb, 15 cm² braun

Die Überlegenheit von 3,5-Di-tert.butyl-4-hydroxyphenylpropionsäure über andere phenolischen Carbonsäuren wird aus Vergleichs-Beispiel 2 c) deutlich.

Ein "Gelbtest" mit Frottierstoff umhüllten Schaummustern ergab bei:
a) charakteristische Gelbfärbung im Bereich der Umluftströmung
b) keine Verfärbung des Stoffes
c) keine Verfärbung des Stoffes

## Patentansprüche

1. Verwendung von 3,5-Di-tert.butyl-4-hydroxyphenyl-propionsäure (BHP) als Stabilisator für Polyetherpolyole vom Molgewicht 300 - 10-000.

## Claims

1. The use of 3,5-di-tert.butyl-4-hydroxyphenylpropionic acid (BHP) as a stabilizer for polyether polyols having a molecular weight of 300 to 10,000.

## Revendications

1. Utilisation de l'acide 3,5-di-tert-butyl-4-hydroxyphénylpropionique (BEP) en tant que stabilisant pour des polyéther-polyols de poids moléculaire 300 à 10 000.
